Europäisches Patentamt

European Patent Office

Office européen des brevets

(11) Veröffentlichungsnummer: **0 462 434 A1**

## EUROPÄISCHE PATENTANMELDUNG

(21) Anmeldenummer: **91108919.1**

(22) Anmeldetag: **31.05.91**

(51) Int. Cl.5: **D21F 1/60**

(30) Priorität: **13.06.90 DE 4018890**

(43) Veröffentlichungstag der Anmeldung:
**27.12.91 Patentblatt 91/52**

(84) Benannte Vertragsstaaten:
**AT DE FR GB IT SE**

(71) Anmelder: **Hermann Finckh Maschinenfabrik GmbH & Co.**
**Marktstrasse 185**
**W-7417 Pfullingen(DE)**

(72) Erfinder: **Holz, Emil**
**Metzinger Strasse 51**
**W-7412 Eningen u.A.(DE)**

(74) Vertreter: **Hoeger, Stellrecht & Partner**
**Uhlandstrasse 14 c**
**W-7000 Stuttgart 1(DE)**

(54) **Walze für Papiermaschinen.**

(57) Walze für Papiermaschinen, insbesondere Blattbildungs- oder Formierwalze, deren Außenumfang von in radialer Richtung hochkant stehenden und zumindest ungefähr in Umfangsrichtung verlaufenden Bändern (20) gebildet wird, welche im Bereich ihrer am Walzenaußenumfang befindlichen ersten Längskanten (24) einen mäanderförmigen Verlauf aufweisen und über Mäanderbögen einander in Walzenlängsrichtung benachbarter Bandbereiche miteinander verbunden sind, wobei zur Erhöhung der Stabilität des von den Bändern gebildeten Wabenhohlkörpers die Bänder (20) im Bereich ihrer innenliegenden zweiten Längskanten (22) - in der Draufsicht auf den Walzenumfang - zumindest ungefähr geradlinig verlaufen und im Bereich ihrer außenliegenden ersten Längskanten (24) mit die Mäanderbögen bildenden Auswölbungen versehen sind.

FIG.2

EP 0 462 434 A1

Die Erfindung betrifft eine Walze für Papiermaschinen, insbesondere eine Blattbildungs- oder Formierwalze, deren Außenumfang von in radialer Richtung hochkant stehenden und zumindest ungefähr in Umfangsrichtung verlaufenden Bändern gebildet wird, welche im Bereich ihrer am Walzenaußenumfang befindlichen ersten Längskanten einen mäanderförmigen Verlauf aufweisen und über Mäanderbögen einander in Walzenlängsrichtung benachbarter Bandbereiche miteinander verbunden sind. Bei solchen Walzen können einander in Walzenlängsrichtung benachbarte Bandbereiche entweder von separaten, zum Kreis geschlossenen Bändern gebildet werden, so daß jedes Band exakt in Umfangsrichtung verläuft, es ist aber auch möglich, daß der Walzenumfang von einem einzigen Band oder von mehreren Bändern gebildet wird, welches bzw. welche schraubenlinienförmig längs der Walze verläuft bzw. verlaufen. Alle diese Arten von Walzen sind als unter die Erfindung fallend zu betrachten.

Bei einer bekannten Walze der vorstehend geschilderten Art sind zwischen hochkant stehenden und insgesamt mäanderförmig ausgebildeten ersten Bändern hochkant stehende und gestreckt verlaufende zweite Bänder angeordnet, gegen welche Mäanderbögen der gewellten ersten Bänder anliegen; an den Kontaktstellen sind die Mäanderbögen mit den gestreckten zweiten Bändern verschweißt, so daß die gewellten und die gestreckten Bänder zusammen einen zylindrischen Hohlkörper bilden. Dabei sind - in der Draufsicht auf den Walzenumfang - in Walzenlängsrichtung aufeinander folgende Bandabschnitte um die Länge eines Mäanderbogens gegeneinander versetzt.

Im Betrieb bekannter Walzen der geschilderten Art hat sich nun gezeigt, daß an den hochkant stehenden Bändern immer wieder Brüche auftreten, die auf die hohen Umfangskräfte zurückzuführen sind, welche im Betrieb am Umfang der Blattbildungs- oder Formierwalzen auftreten. Diese hohen Umfangskräfte sind darauf zurückzuführen, daß die in Rede stehenden Walzen auch die Funktion von Siebantriebswalzen haben. Hinzu kommt die Beanspruchung durch infolge der hohen Drehzahlen der Walzen außerordentlich große Zentrifugalkräfte. Schließlich wird die Gefahr des Auftretens von Bandbrüchen noch dadurch vergrößert, daß bei den bekannten Walzen der in Rede stehenden Art die radial hochkant stehenden Bänder in Walzenlängsrichtung mit erheblichen Abständen voneinander angeordnet sind.

Der Erfindung liegt die Aufgabe zugrunde, Walzen der eingangs erwähnten Art so zu verbessern, daß die Gefahr des Auftretens von Bandbrüchen zumindest deutlich verringert wird, und diese Aufgabe läßt sich erfindungsgemäß dadurch lösen, daß die Bänder im Bereich ihrer innenliegenden zweiten Längskanten - in der Draufsicht auf den Walzenumfang - zumindest ungefähr geradlinig verlaufen und im Bereich ihrer außenliegenden ersten Längskanten mit die Mäanderbögen bildenden Auswölbungen versehen sind. Aufgrund des Umstands, daß bei einer erfindungsgemäßen Wabenwalze die Mäanderbögen nur von den radial außenliegenden Bereichen der gewellten Bänder gebildet werden, können bei gleicher Wabengröße die radial innenliegenden Bereiche der gewellten Bänder in Walzenlängsrichtung mit weit geringeren Abständen voneinander angeordnet werden als bei den bekannten Wabenwalzen, wodurch die Festigkeit des von den hochkant stehenden Bändern gebildeten hohlzylindrischen Wabenkörpers beträchtlich erhöht wird - wird der Wabenkörper nur von gewellten Bändern gebildet, ist bei gleicher Wabengröße der in Walzenlängsrichtung gemessene Abstand der radial innenliegenden Bandbereiche voneinander nur etwa halb so groß wie bei einer Wabenwalze bekannter Konstruktion. Des weiteren wird das Risiko von Bandbrüchen auch dadurch verringert, daß die Bänder z.B. nur über ihre halbe Höhe bzw. in radialer Richtung gemessene Breite verformt werden müssen, während bei den bekannten Wabenwalzen die gewellten Bänder durch Abbiegen über ihre ganze Breite in die Mäanderform gebracht werden.

Bei einer bevorzugten Ausführungsform handelt es sich bei den Bändern um Blechbänder, deren Auswölbungen durch Prägen hergestellt wurden, d.h. bei den Auswölbungen handelt es sich um Einprägungen. Es wäre aber auch denkbar, Kunststoffbänder zu verwenden, in denen die Auswölbungen durch Heißverformen hergestellt werden.

Bevorzugt werden Ausführungsformen der erfindungsgemäßen Walze, bei denen die Auswölbungen alle nach einer Seite des Bands bzw. der Bänder ausgewölbt sind, bei einer alternativen Ausführungsform sind die Auswölbungen jedoch abwechselnd nach der einen und nach der anderen Seite des Bands ausgewölbt. In jedem Fall empfiehlt es sich, das Band bzw. die Bänder so anzuordnen, daß in Walzenlängsrichtung aufeinander folgende Bandabschnitte um die Länge eines Mäanderbogens gegeneinander versetzt sind.

Anders als bei der eingangs geschilderten bekannten Walze mit gewellten und mit gestreckten Bändern empfehlen sich Ausführungsformen der erfindungsgemäßen Walze, bei denen in Walzenlängsrichtung aufeinander folgende Bandabschnitte mit ihren Mäanderbögen unmittelbar gegeneinander anliegen und an den so geschaffenen Kontaktstellen miteinander verbunden sind. Dies bedeutet natürlich nicht, daß die Mäanderbögen eines Bandabschnitts wiederum gegen Mäanderbögen des in Walzenlängsrichtung benachbarten Bandabschnitts anliegen müssen, denn wenn die Auswölbungen eines Bands alle nach einer Seite dieses Bandes ausgewölbt sind, liegen die Mäanderbögen eines Bandabschnitts gegen gerade Bereiche des benachbarten Bandabschnitts an.

Des weiteren wird empfohlen, die Bandabschnitte an den Kontaktstellen miteinander zu verschweißen, was natürlich nicht nur bei Blechbändern möglich ist, sondern auch bei Kunststoffbändern. Es ist jedoch auch denkbar, anstelle des Verschweißens, z.B. des Punktschweißens, zu einer Kleb- oder Nietverbindung zu greifen, obwohl ein Verbinden durch Schweißen bei weitem zu bevorzugen ist.

Eine besonders stabile und dauerhafte Walze erhält man dann, wenn ein erfindungsgemäß ausgebildeter Wabenkörper auf einen zylindrischen Tragkörper aufgeschrumpft wird, d.h. wenn die Bänder einen zylindrischen Hohlkörper bilden, welcher auf einen zylindrischen Tragkörper aufgeschrumpft ist. Bei dem Tragkörper kann es sich um einen Vollzylinder handeln, bevorzugt wird jedoch ein Tragkörper in Form eines Tragrohrs.

Bei besonders vorteilhaften Ausführungsformen erfindungsgemäßer Blattbildungs- oder Formierwalzen haben die innenliegenden zweiten Längskanten von in Walzenlängsrichtung aufeinander folgenden Bandabschnitten voneinander einen Abstand von ca. 3 mm bis ca. 10 mm und vorzugsweise von ca. 5 mm bis ca. 8 mm; im letztgenannten Falle ergeben sich dann Waben, deren in Walzen-Längsrichtung gemessene Breite ca. 10 bis ca. 16 mm beträgt.

Besonders bei Ausführungsformen mit einem an seinem Außenumfang geschlossenen zylindrischen Tragkörper empfiehlt es sich, die Walze so auszubilden, daß die Bänder im Bereich ihrer innenliegenden zweiten Längskanten Öffnungen aufweisen, und zwar vorzugsweise randoffene Öffnungen, welche an den Tragkörper angrenzen. Durch solche Öffnungen lassen sich Probleme beim Entwässern einer Faservliesbahn vermeiden, da es trotz eines an seinem Umfang geschlossenen Tragkörpers möglich ist, am Außenumfang der Walze einen überall ungefähr gleich großen Unterdruck aufrechtzuerhalten.

Weitere Merkmale, Vorteile und Einzelheiten der Erfindung ergeben sich aus der nachfolgenden Beschreibung sowie der beigefügten zeichnerischen Darstellung zweier besonders bevorzugter Ausführungsformen der erfindungsgemäßen Walze; in der Zeichnung zeigen:

Fig. 1   einen schematischen axialen Längsschnitt durch die Walze;

Fig. 2   den Ausschnitt "A" aus Figur 1 in größerem Maßstab;

Fig. 3   eine Ansicht der in Figur 2 gezeigten Elemente, gesehen in Richtung des Pfeils "B" aus Figur 2,

Fig. 4 und 5   den Figuren 2 und 3 entsprechende Darstellungen einer zweiten Ausführungsform der erfindungsgemäßen Walze.

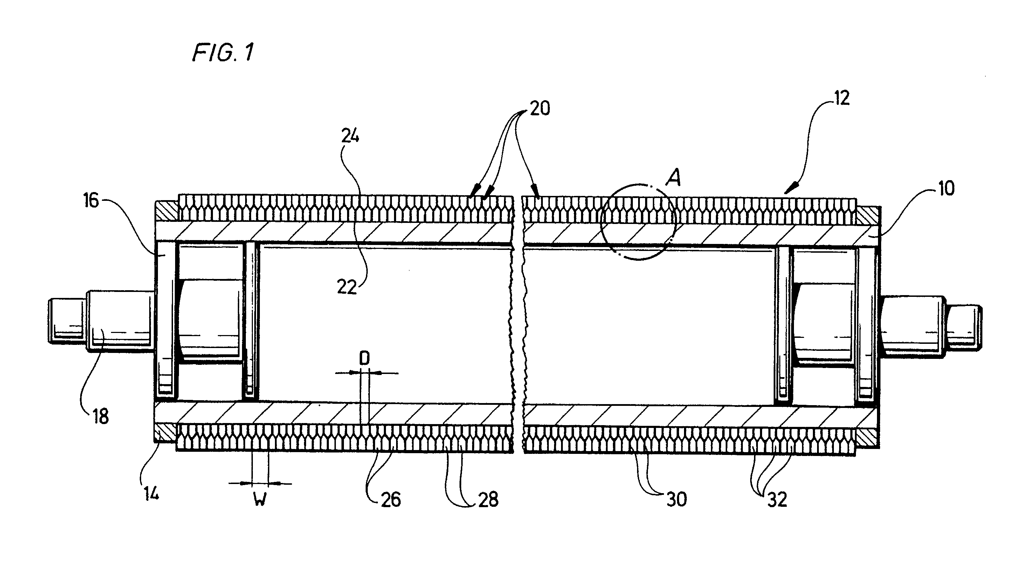

Die Figur 1 zeigt einen auf ein Tragrohr 10 aufgeschrumpften und erfindungsgemäß ausgebildeten hohlzylindrischen Wabenhohlkörper 12, an dessen stirnseitigen Enden Abschlußringe 14 auf dem Tragrohr 10 befestigt sind. Im Tragrohr 10 sind außerdem dieses stirnseitig verschließende Walzenböden 16 befestigt, welche der Lagerung und dem Antrieb der Trommel dienende Wellenstummel 18 halten.

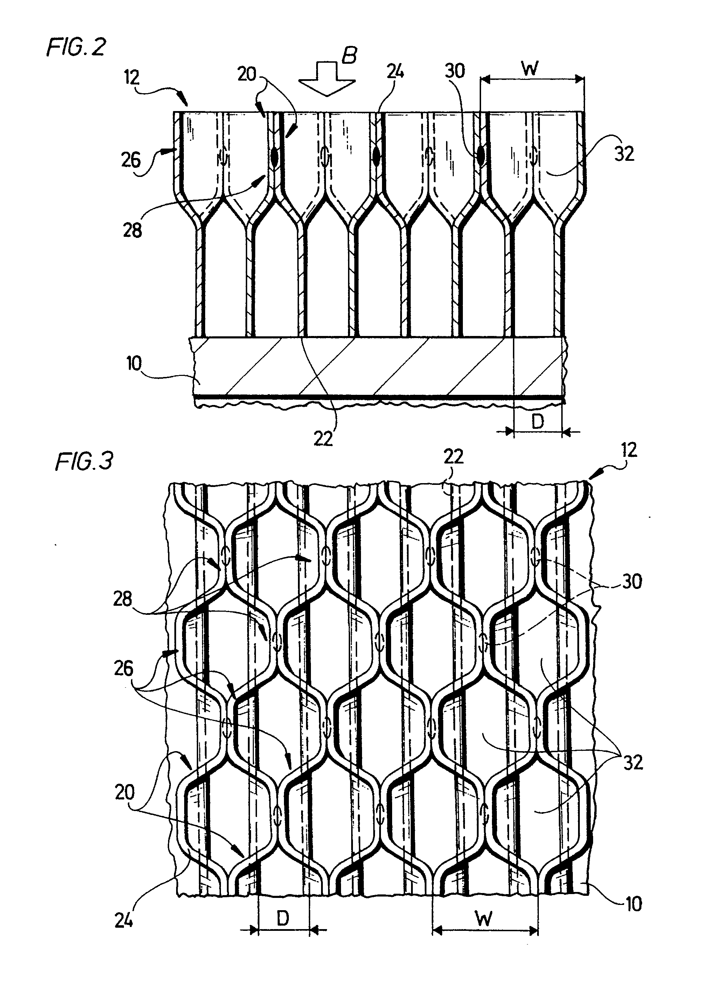

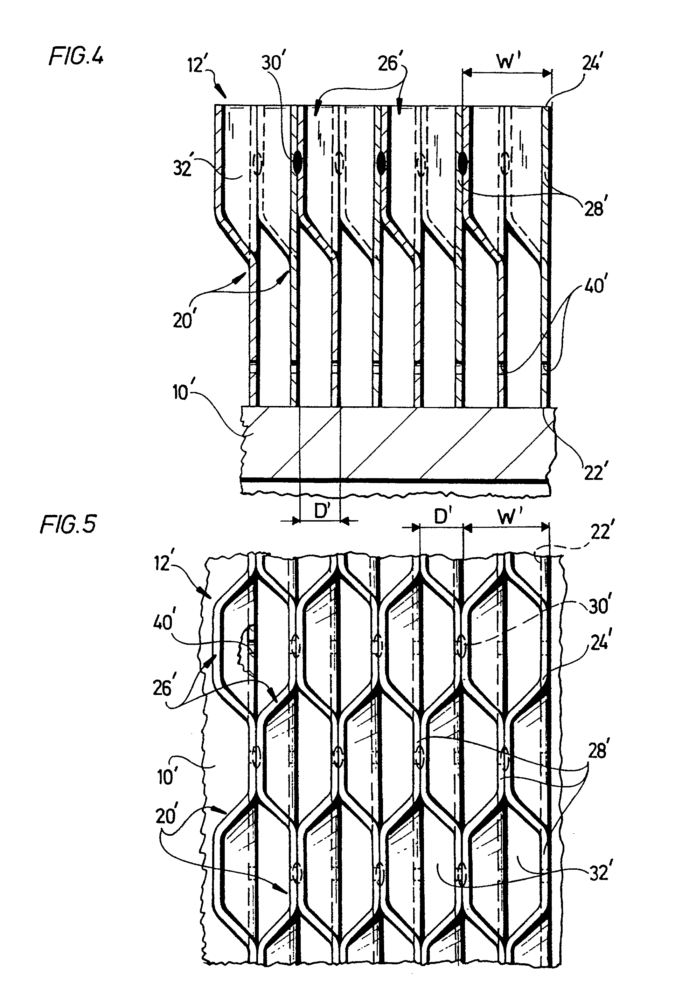

Aufbau und Gestaltung des Wabenhohlkörpers 12 der ersten Ausführungsform der erfindungsgemäßen Walze sollen nun anhand der Figuren 2 und 3 erläutert werden.

Bei dieser Ausführungsform besteht der Wabenhohlkörper 12 aus einer Vielzahl von zum Kreisring geschlossenen, in radialer Richtung hochkant stehenden und in Umfangsrichtung der Walze verlaufenden Bändern 20, welche in axialer Richtung der Walze nebeneinander angeordnet sind. Die Bänder bestehen zweckmäßigerweise aus rostfreiem Stahlblech.

Erfindungsgemäß sind die radial inneren Längskanten 22 der Bänder 20 - in der Draufsicht auf den Walzenumfang - geradlinig ausgebildet, d.h. daß jede dieser inneren Längskanten 22 exakt einen Kreis bildet, und nach einem weiteren Merkmal der Erfindung ist der radial innere Bereich eines jeden der Bänder 20, welcher ungefähr die halbe Bandbreite einnimmt, als ebener Kreisring ausgebildet. Hingegen verlaufen erfindungsgemäß die radial äußeren Längskanten 24 - wiederum in der Draufsicht auf den Walzenumfang - mäanderförmig, so wie dies deutlich die Figur 3 erkennen läßt, was dadurch erreicht wird, daß man die Bänder 20 so mit Einprägungen versieht, daß sie nach der einen Seite ausgewölbte erste Auswölbungen 26 und nach der anderen Seite ausgewölbte zweite Auswölbungen 28 aufweisen, wobei in Umfangsrichtung erste und zweite Auswölbungen abwechselnd aufeinander folgen. Vorteilhafterweise gleicht der von den äußeren Längskanten 24 gebildete Mäander ungefähr einer Sinuslinie mit - in der Draufsicht auf den Walzenumfang - der zugehörigen inneren Längskante 22 als Mittellinie. Bei der dargestellten Ausführungsform ist die Tiefe der ersten und der zweiten Auswölbungen 26 bzw. 28 gleich groß, was aber nicht unbedingt der Fall sein muß. Schließlich nehmen die Auswölbungen 26 und 28 vorteilhafterweise ungefähr die halbe Breite der Bänder 20 ein, d.h. die radiale Höhe der Auswölbungen 26, 28 entspricht ungefähr der halben radialen Höhe der Bänder 20.

Wie deutlich die Figur 3 erkennen läßt, sind die ersten Auswölbungen 26 eines Bandes 20 gegenüber den ersten Auswölbungen 26 der beiden benachbarten Bänder 20 um die in Umfangsrichtung gemessene Länge einer Auswölbung 26 bzw. 28 in Umfangsrichtung versetzt, so daß die Auswölbungen 26 eines Bandes 20 gegen die Auswölbungen 28 des einen der beiden benachbarten Bänder 20 und die Auswölbungen 28 des besagten Bandes gegen die Auswölbungen 26 des anderen benachbarten Bandes anliegen. An den so geschaffenen Kontaktstellen 30 sind die Bänder 20 durch Punktschweißen fest miteinander verbunden, so daß die Gesamtheit der Bänder 20 den in sich zusammenhängenden Wabenhohlkörper 12 bildet, der dann als Ganzes auf das Tragrohr 10 aufgeschrumpft wird.

Des weiteren lassen die Figuren 2 und 3 deutlich erkennen, daß der axiale Abstand "D" der inneren Längskanten 22 einander benachbarter Bänder 20 ungefähr halb so groß ist wie die Breite "W" der von den Bändern gebildeten Waben 32. Der Abstand "D" kann vorteilhafterweise zwischen ca. 5 mm und ca. 10 mm liegen und soll bei der dargestellten bevorzugten Ausführungsform ca. 5 mm betragen.

Anhand der Figuren 4 und 5 soll nun die zweite Ausführungsform erläutert werden, wobei nur diejenigen Merkmale beschrieben werden sollen, in welchen sich diese zweite Ausführungsform von der Ausführungsform nach den Figuren 2 und 3 unterscheidet. Außerdem wurden in den Figuren 4 und 5 dieselben Bezugszeichen wie in den Figuren 2 und 3 verwendet, jedoch unter Hinzufügung eines Strichs.

Bei dieser zweiten Ausführungsform besitzen die Bänder 20' nur erste Auswölbungen 26', zwischen denen sich gerade Bereiche 28' befinden, d.h. sämtliche Auswölbungen 26' eines Bandes 20' sind - in der Draufsicht auf den Walzenumfang - nach derselben Seite der inneren Längskante 22' hin ausgewölbt, während die zwischen den Auswölbungen 26' befindlichen geraden Bereiche 28' streng radial ausgerichtet sind, d.h. in einer Durchmesserebene der Walze liegen.

Wie die Figur 5 erkennen läßt, beträgt auch bei dieser zweiten Ausführungsform die Breite W' der Waben 32' das Doppelte des axialen Abstands D' der Bänder 20' voneinander, obwohl bei dieser zweiten Ausführungsform die Bänder nur nach der einen Bandseite ausgewölbte Auswölbungen 26' besitzen.

An den Kontaktstellen 30' zwischen den Rükken der Auswölbungen 26' und den geraden Bereichen 28' einander benachbarter Bänder 20' sind die Bänder fest miteinander verbunden, insbesondere durch Punktschweißen.

Um über den ganzen Wabenhohlkörper 12 gleichmäßige Druckverhältnisse zu gewährleisten, ist es vorteilhaft, die Bänder mit Durchlaßöffnungen zu versehen, die bei der Ausführungsform nach den Figuren 4 und 5 von dem Außenumfang des Tragrohrs 10 benachbarten, randoffenen Durchlaßöffnungen 40' gebildet werden; dabei handelt es sich insbesondere um Ausstanzungen aus den Bändern.

Wie bereits erwähnt, muß der Wabenhohlkörper nicht von in Richtung der Walzenachse nebeneinander angeordneten und zu Kreisringen geschlossenen Bändern gebildet werden; vielmehr wäre es bei beiden Ausführungsformen nach den Figuren 1 bis 5 möglich, z.B. nur ein einziges Band 20 bzw. 20' schraubenlinienförmig um das Tragrohr 10 bzw. 10' herumlaufen zu lassen, wobei natürlich die in Umfangsrichtung gemessene Länge der Auswölbungen 26, 28 bzw. der Auswölbungen 26' und der geraden Bereiche 28' so auf den Außenumfang des Tragrohrs und die radiale Höhe bzw. Breite der Bänder 20 bzw. 20' abgestimmt sein muß, daß sich der in den Figuren 3 und 5 erkennbare Versatz (in Umfangsrichtung) der Auswölbungen 26 bzw. 26' einander in axialer Richtung benachbarter Bandbereiche ergibt. Es wäre des weiteren möglich, z.B. zwei oder mehr Bänder 20 bzw. 20' nach Art der Gewindegänge einer mehrgängigen Schraube so schraubenlinienförmig um das Tragrohr 10 bzw. 10' herum verlaufend anzuordnen, daß sich die gewünschte Wabenstruktur ergibt; würden beispielsweise drei Bänder 20 bzw. 20' verwendet werden, so würden alle diese drei Bänder wendelförmig um das Tragrohr herum verlaufen, wobei in Richtung der Walzenachse Bereiche des ersten, des zweiten und des dritten Bandes aufeinander folgend nebeneinander liegen würden.

## Patentansprüche

1. Walze für Papiermaschinen, deren Außenumfang von in radialer Richtung hochkant stehenden und zumindest ungefähr in Umfangsrichtung verlaufenden Bändern gebildet wird, welche im Bereich ihrer am Walzenaußenumfang befindlichen ersten Längskanten einen mäanderförmigen Verlauf aufweisen und über Mäanderbögen einander in Walzenlängsrichtung benachbarter Bandbereiche miteinander verbunden sind, dadurch gekennzeichnet, daß die Bänder (20; 20') im Bereich ihrer innenliegenden zweiten Längskanten (22; 22') - in der Draufsicht auf den Walzenumfang - zumindest ungefähr geradlinig verlaufen und im Bereich ihrer außenliegenden ersten Längskanten (24; 24') mit die Mäanderbögen bildenden Auswölbungen (26, 28; 26') versehen sind.

2. Walze nach Anspruch 1, dadurch gekennzeichnet, daß die Bänder (20; 20') Blechbänder und die Auswölbungen (26, 28; 26') als Einprägungen ausgebildet sind.

3. Walze nach Anspruch 1 oder 2, dadurch gekennzeichnet, daß die Auswölbungen (26, 28) abwechselnd nach der einen und nach der anderen Seite des Bands (20) ausgewölbt sind.

4. Walze nach Anspruch 1 oder 2, dadurch gekennzeichnet, daß die Auswölbungen (26') alle nach einer Seite des Bands (20') ausgewölbt sind.

5. Walze nach Anspruch 3 oder 4, dadurch gekennzeichnet, daß in Walzenlängsrichtung aufeinander folgende Bandabschnitte um die Länge eines Mäanderbogens (26 bzw. 28; 26') in Walzenumfangsrichtung gegeneinander versetzt sind.

6. Walze nach einem oder mehreren der vorstehenden Ansprüche, dadurch gekennzeichnet, daß in Walzenlängsrichtung aufeinander folgende Bandabschnitte mit ihren Mäanderbögen (26, 28; 26') unmittelbar gegeneinander anliegen und an den so geschaffenen Kontaktstellen (30; 30') fest miteinander verbunden sind.

7. Walze nach Anspruch 6, dadurch gekennzeichnet, daß die Bandabschnitte an den Kontaktstellen (30; 30') miteinander verschweißt sind, insbesondere durch Punktschweißen.

8. Walze nach einem oder mehreren der vorstehenden Ansprüche, dadurch gekennzeichnet, daß die Bänder (20; 20') einen zylindrischen Hohlkörper (12) bilden, welcher auf einen zylindrischen Tragkörper (10; 10') aufgeschrumpft ist.

9. Walze nach Anspruch 8, dadurch gekennzeichnet, daß der Tragkörper (10; 10') ein Tragrohr ist.

10. Walze nach einem oder mehreren der vorstehenden Ansprüche, dadurch gekennzeichnet, daß die innenliegenden zweiten Längskanten (22; 22') von in Walzenlängsrichtung aufeinander folgenden Bandabschnitten voneinander einen Abstand (D; D') von ca. 3 mm bis ca. 10 mm aufweisen.

11. Walze nach Anspruch 10, dadurch gekennzeichnet, daß der Abstand (D; D') ca. 5 mm bis ca. 8 mm beträgt.

12. Walze nach einem oder mehreren der vorstehenden Ansprüche, dadurch gekennzeichnet, daß die Bänder (20') insbesondere im Bereich ihrer innenliegenden zweiten Längskanten (22') Öffnungen (40') aufweisen.

FIG. 1

FIG.2

FIG.3

FIG.4

FIG.5

# EUROPÄISCHER RECHERCHENBERICHT

Nummer der Anmeldung

## EP 91 10 8919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-3 969 80 (LINDNER)<br>* das ganze Dokument *<br>– – – | 1-3,5-7 | D 21 F 1/60 |
| A | EP-A-0 176 610 (FINCKH)<br>* das ganze Dokument *<br>– – – | 1,8,9,12 | |
| A | DE-A-2 253 947 (IMPROVED MACHINERY)<br>– – – – – | | |

RECHERCHIERTE SACHGEBIETE (Int. Cl.5)

D 21 F

Der vorliegende Recherchenbericht wurde für alle Patentansprüche erstellt

| Recherchenort | Abschlußdatum der Recherche | Prüfer |
|---|---|---|
| Den Haag | 26 September 91 | DE RIJCK F. |